Europäisches Patentamt

European Patent Office

Office européen des brevets

(19)

(11) EP 0 944 096 A1

(12) DEMANDE DE BREVET EUROPEEN

(43) Date de publication:
22.09.1999 Bulletin 1999/38

(51) Int Cl.⁶: **G21F 9/16**, G21F 9/30,
B09B 3/00, B09C 1/08

(21) Numéro de dépôt: 99400625.2

(22) Date de dépôt: 15.03.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 19.03.1998 FR 9803350

(71) Demandeur: ELF ATOCHEM S.A.
92800 Puteaux, Hauts-de-Seine (FR)

(72) Inventeurs:
• **Lepizzera, Stéphane**
**57500 Saint Avold (FR)**

• **Sainsard, Guillaume**
**57550 Falck (FR)**

(74) Mandataire: **Rieux, Michel et al**
**ELF ATOCHEM S.A.,**
**Département Propriété Industrielle,**
**4, Cours Michelet,**
**La Défense 10,**
**Cédex 42**
**92091 Paris la Défense (FR)**

(54) **Procédé d'inclusion d'eau ou d'une matière contenant de l'eau au sein d'un bloc solide de (co)polymère de méthacrylate de dicyclopentadiényloxyéthyle**

(57) Utilisation d'au moins l'un parmi :

- le tétraacétylacétonate de zirconium $(Zr(Acac)_4)$ ;
- le tétraacétylacétonate de titane $[Ti(Acac)_4]$ ; et
- le tétra-n-butoxytitane $[Ti(OBu)_4]$,

comme agent améliorant la capacité du méthacrylate de dicyclopentadiényloxyéthyle (DCPOEMA) à former une émulsion stable avec l'eau sans ajout de tensio-actif.

EP 0 944 096 A1

Printed by Jouve, 75001 PARIS (FR)

**Description**

La présente invention concerne l'inclusion d'eau ou de matières contenant de l'eau au sein d'un bloc solide de (co)polymère de méthacrylate de dicyclopentadiényloxyéthyle (DCPOEMA). Les matières contenant de l'eau sont notamment des résines échangeuses d'ions, contaminées en particulier par des éléments radioactifs, ou encore des eaux contaminées par des polluants, le procédé d'inclusion de l'invention permettant alors le conditionnement de tels déchets industriels.

Le brevet européen EP-B-0 556 118 décrit le procédé d'inclusion de substances diverses, dont l'eau et les matières contenant de l'eau, au sein de blocs solides de ces (co)polymères à base de DCPOEMA. Ce procédé permet d'obtenir des blocs pouvant contenir jusqu'à 40% en poids d'eau par rapport au système de monomères mis en jeu.

La Société déposante a maintenant découvert de façon surprenante que le tétraacétylacétonate de zirconium [(Zr(Acac)$_4$], le tétraacétylacétonate de titane [Ti(Acac)$_4$] et le tétra-n-butoxytitane [Ti(OBu)$_4$] sont des agents améliorant la capacité du DCPOEMA à former une émulsion stable avec l'eau sans l'utilisation d'agent tensio-actif et avec, pour conséquence, la possibilité d'inclure davantage d'eau dans les blocs solides de (co)polymères à base de DCPOEMA dans la mise en oeuvre du procédé selon EP-B-0 556 118.

La présente invention a donc d'abord pour objet l'utilisation d'au moins l'un parmi Zr(Acac)$_4$, Ti(Acac)$_4$ et Ti(OBu)$_4$ comme agent ayant les fonctions précitées, chacun parmi Zr(Acac)$_4$, Ti(Acac)$_4$ et Ti(OBu)$_4$ étant utilisé notamment à raison de 50 à 50 000 ppm, de préférence à raison de 500 à 5000 ppm, par rapport au DCPOEMA.

La présente invention a également pour objet un procédé d'inclusion d'eau ou d'une matière contenant de l'eau au sein d'un bloc solide de (co)polymère du DCPOEMA, procédé suivant lequel on conduit la (co)polymérisation du DCPOEMA après mélange du système de (co)polymérisation avec l'eau ou la matière contenant de l'eau à inclure, caractérisé par le fait que le système de (co)polymérisation contient au moins l'un parmi Zr(Acac)$_4$, Ti(Acac)$_4$ et Ti(OBu)$_4$, comme agent ayant les fonctions précitées, avantageusement dans les quantités telles qu'indiquées ci-dessus.

La matière contenant de l'eau à inclure au sein d'un bloc peut être une résine échangeuse d'ions contaminée par des éléments radio-actifs et contenant une quantité d'eau comprise en général entre 40 et 65% en poids ; ou de l'eau contenant des polluants, tels que des ions monovalents ou polyvalents, par exemple des sels de cobalt, de fer, de chrome, de bore, de césium, à des concentrations relativement élevées, pouvant aller jusqu'à 50 % en poids, ou plus, même dans des conditions de pH extrêmes, telles que pH 1.

Conformément à la présente invention, on peut former des blocs incorporant de l'eau dans une proportion qui peut aller jusqu'à 75% en poids par rapport au système de monomères mis en jeu.

Selon l'invention, on utilise avantageusement un système de copolymérisation dont les monomères comprennent en dehors du DCPOEMA :

> (1) au moins un comonomère additionnel choisi parmi les monomères acryliques, les monomères méthacryliques, les monomères vinylaromatiques et les monomères diéniques ; et/ou
> (2) au moins un monomère réticulant choisi notamment parmi les di- ou triméthacrylates, comme le triméthacrylate de triméthylolpropane, le diacrylate d'hexanediol, le triacrylate de triméthylolpropaneoxyéthyle, le triacrylate de glycéroltrioxypropyle, le diméthacrylate de l'éthylène glycol et le diacrylate de tripropylène glycol,

les monomères (1) et/ou (2) pouvant représenter chacun jusqu'à 20% en poids par rapport au DCPOEMA.

Comme exemples de monomères acryliques entrant dans la définition des comonomères (1), on peut citer les acrylates d'alkyle primaire, secondaire ou tertiaire, dont le groupe alkyle, le cas échéant substitué par exemple par au moins un atome d'halogène, tel que fluor, et/ou au moins un groupe hydroxyle, contient 1 à 18 atomes de carbone, en mentionnant plus particulièrement l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle et l'acrylate d'isobornyle ; ainsi que l'acide acrylique.

Comme exemples de monomères méthacryliques entrant dans la définition des comonomères (1), on peut citer les méthacrylates d'alkyle dont le groupe alkyle, le cas échéant substitué, par exemple par au moins un atome d'halogène comme le fluor et/ou au moins un groupe hydroxyle, contient 1 à 18 atomes de carbone, comme les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de β-hydroxy-éthyle, le méthacrylate de glycidyle, le méthacrylate d'isobornyle ; ainsi que l'acide méthacrylique.

Comme exemples de monomères vinylaromatiques entrant dans la définition des comonomères (1), on peut citer le styrène, le vinyltoluène, l'alphaméthylstyrène, le méthyl-4-styrène, le méthyl-3-styrène, le méthoxy-4-styrène, l'hydroxynéthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène.

Comme exemples de monomères diéniques entrant dans la définition des comonomères (1), on peut citer les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-hexényl)-2-norbornène, le 1,5-cyclooctadiène, le bicyclo[2,2,2]octa-2,5-diène, le cyclopentadiène, le 4,7,8,9-tétrahydroindène et l'isopropylidène tétrahydroindène.

Le système de (co)polymérisation peut aussi comprendre au moins un agent épaississant choisi parmi les oligomères (méth)acryliques tels que le diméthylacrylate de diglycidyle du bisphénol et le fumarate de diglycidyle du bisphénol, le ou les agents épaississants pouvant représenter jusqu'à 30% en poids par rapport au DCPOEMA.

Egalement, le système de (co)polymérisation peut comprendre :

- au moins un initiateur de polymérisation choisi parmi les peroxydes et les percarbonates, à raison de 0,5 à 5% en poids par rapport à tous les autres constituants du système de (co)polymérisation ; et
- au moins un activateur choisi parmi les amines tertiaires et les activateurs organométalliques à raison de 0,01 à 4% en poids par rapport à tous les autres constituants du système de (co)polymérisation.

L'initiateur peut être notamment choisi parmi le peroxyde de benzoyle, le peroxyde de lauryle et les percarbonates d'alcoyle. L'activateur peut être choisi parmi la triméthylamine, la diméthylparatoluidine, la triméthylaniline et leurs mélanges, ou encore parmi les composés organométalliques de cobalt, de zirconium ou de vanadium.

Le système de (co)polymérisation peut en outre, de façon connue, contenir au moins un agent de transfert comme le dodécylmercaptan.

Conformément à un mode de réalisation particulier du procédé de la présente invention, on conduit la (co)polymérisation à la température ambiante, en agitant, dans un réacteur, le ou les monomères, l'eau ou la matière contenant de l'eau, l'initiateur de polymérisation, en y ajoutant l'activateur sous agitation, et, le cas échéant, un agent de transfert, puis en laissant la température s'élever ensuite à une valeur au plus égale à 100°C au bout d'un laps de temps au plus égal à 40 minutes, pour obtenir un bloc qu'on laisse refroidir et que l'on peut ensuite, si on le désire, soumettre à une cuisson à une température comprise entre 50 et 85°C pendant 2 à 15 heures.

Les Exemples suivants illustrent la présente invention sans toutefois en limiter la portée. Dans ces exemples, les parties et pourcentages sont en poids sauf indication contraire et les abréviations suivantes ont été utilisées :

DCPOEMA : méthacrylate de dicyclopentadiényloxyéthyle

$$CH_2=\underset{\underset{O}{\overset{\|}{C}}}{\overset{\overset{CH_3}{|}}{C}}-O-CH_2-CH_2-O-$$

ABU : acrylate de n-butyle

A2EH : acrylate de 2-éthylhexyle

MAM : méthacrylate de méthyle

MABU : méthacrylate de n-butyle

MA2EH : méthacrylate de 2-éthylhexyle

AME : acrylate de 2-méthoxyéthyle

ABUDG : acrylate de butyl glycol

MAEE : méthacrylate de 2-éthoxyéthyle

MABUDG : méthacrylate de butyl glycol

```
AISOBOR      :      acrylate d'isobornyle
TPGDA        :      diacrylate de tripropylèneglycol
TMPTA        :      triacrylate de triméthylopropane


EMHQ         :      éther méthylique de l'hydroquinone
PTZ          :      phénothiazine
BHT          :      bis tertiobutyl hydroxytoluène
HQ           :      hydroquinone
```

EXEMPLE 1 : Mise en évidence de l'amélioration de la stabilité d'une émulsion DCPOEMA/eau par Zr(Acac)$_4$, Ti(Acac)$_4$ et Ti(OBu)$_4$

Mode opératoire général

Un mélange DCPOEMA/Eau (60/40 en poids) est réalisé et agité manuellement dans un flacon. L'émulsion ainsi obtenue est ensuite versée rapidement dans une éprouvette graduée de 50 ml et les hauteurs des deux séparations de phase : entre l'eau et l'émulsion (dans la partie supérieure), et entre l'émulsion et le DCPOEMA (dans la partie inférieure) sont suivies en fonction du temps.

La stabilité de l'émulsion à un temps donné est mesurée par le pourcentage du volume de l'émulsion par rapport au volume total du mélange DCPOEMA + $H_2O$.

On a utilisé les DCPOEMA suivants :

- DCPOEMA n° 1 à 3 : obtenus avec, comme catalyseur, respectivement 3000 ppm de Zr(Acac)$_4$ (invention) ; 100 ppm de MeONa (référence) ; et 800 ppm de LiOH (référence) ; les inhibiteurs associés sont respectivement 303 ppm de PTZ (n° 1) 200 ppm de BHT (n°2) ; et 100 ppm de HQ (n°3) ;

- DCPOEMA n° 4 (invention) : DCPOEMA n° 3 additionné de 1000 ppm de Zr(Acac)$_4$ ;

- DCPOEMA n° 5 (invention) : DCPOEMA n° 3 additionné de 1200 ppm de Ti(Acac)$_4$ ;

- DCPOEMA n° 6 (invention) : DCPOEMA n° 3 additionné de 1140 ppm de Ti(OBu)$_4$ ;

- DCPOEMA n° 7 (comparatif) : DCPOEMA n° 3 additionné de 1040 ppm de DTBO ;

- DCPOEMA n° 8 (comparatif) : DCPOEMA n° 3 additionné de 1090 ppm de Mg(OMe)$_2$.

Résultats

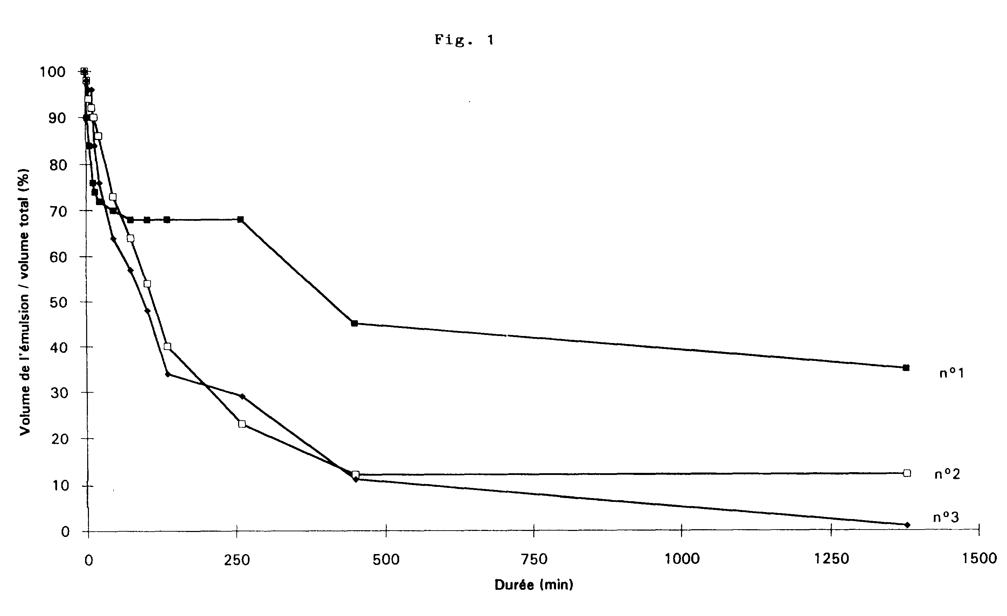

La Figure 1 du dessin annexé représente l'évolution dans le temps de la stabilité des émulsions DCPOEMA n° 1 à 3 + eau.

Dans le Tableau 1 ci-dessous, sont indiquées les efficacités comparatives définies chacune comme étant le rapport du volume de l'émulsion du DCPOEMA n° i (i = 3 à 8) après 247 minutes au volume de l'émulsion du DCPOEMA n° 3 après 247 minutes.

Tableau 1

| N° DCPOEMA | 3 | 4 | 5 | 6 | 7 | 8 |
|---|---|---|---|---|---|---|
| Efficacité comparative | 1 | 2,3 | 1,9 | 1,6 | 0,5 | 0 |

Exemples 2 à 12 : Influence de Zr(Acac)$_4$ sur l'incorporation d'eau dans une matière polymère à base de DCPOEMA

Mode opératoire général

On a utilisé le mélange de monomères suivant :

- DCPOEMA        340 parties
- AISOBOR          60 parties
- TPGDA            20 parties
- TMPTA            20 parties

Un système redox à base de peroxyde de benzoyle (2,5 parties) et de diméthyl paratoluidine (1 partie) est employé pour amorcer la polymérisation à température ambiante.

Le mélange des monomères, l'eau et le peroxyde de benzoyle sont dégazés à l'azote avant d'être émulsionnés mécaniquement pendant 15 minutes. La diméthyl paratoluidine est ensuite ajoutée, et le tout est émulsionné mécaniquement pendant 2 minutes. A la suite de cette dernière étape, le récipient contenant l'émulsion est placé dans un Dewar et la polymérisation est conduite à température ambiante.

Une fois la température du bloc revenue à l'ambiante, le bloc est sorti de son récipient et l'eau restant dans celui-ci est pesée.

La qualité du bloc est caractérisée par la quantité d'eau réellement incorporée dans la matrice polymère :

$$\text{Eau bloquée} = \frac{\text{Masse d'eau dans le bloc}}{\text{Masse initiale d'eau dans l'émulsion}} \ (\%)$$

L'incorporation d'eau dans une matrice polymère à base de DCPOEMA a été évaluée avec différents DCPOEMA.

Les résultats sont indiqués dans le Tableau 2.

Tableau 2

| Exemple | DCPOEMA de départ [catalyseur] | Zr(Acac)$_4$ additionné (ppm) | Proportion d'eau dans l'émulsion eau/ mélange de monomères (%) | Eau bloquée (%) |
|---|---|---|---|---|
| 2 | n°1 [Zr(Acac)$_4$] | 0 | 40 | 100 |
| 3 (comparatif) | n°2 [MeONa] | 0 | 40 | 81 |
| 4 | n°2 | 965 | 40 | 100 |
| 5 | n°2 | 965 | 60 | 100 |
| 6 | n°2 | 966 | 70 | 99 |
| 7 | n°2 | 959 | 75 | 98 |
| 8 | n°2 | 3885 | 75 | 99 |
| 9 (comparatif) | n°3 [LiOH] | 0 | 40 | 23 |
| 10 | n°3 | 864 | 40 | 93 |
| 11 (comparatif) | n°3 bis [LiOH]* | 0 | 40 | 16 |
| 12 | n°3 bis | 863 | 40 | 99 |

* avec 500 ppm EMHQ comme inhibiteur

Des photographies au microscope électronique à balayage ont été réalisées sur un bloc obtenu à l'Exemple 7, séché à 60°C pendant plusieurs jours (bloc rigide de densité 0,25). Elles montrent que les blocs sont constitués de cavités (diamètre moyen = 100 µm) reliées entre elles par des canaux. Des mesures de porosité mercure ont montré que ces blocs avaient un diamètre moyen de pores de l'ordre de 10 µm et une surface spécifique voisine de 3 m$^2$/g.

Exemples 13 à 16 : Inclusion d'une résine échangeuse d'ions cationique dans une résine

Mode opératoire général

Dans un récipient en matière plastique, qui est à température ambiante (20°C), on introduit 75 parties d'une résine échangeuse cationique, contaminée par des éléments radioactifs, préalablement saturée en ammoniaque, et présentant un extrait sec de 55% à 60%.
Sous agitation, on ajoute :

- 340 parties du DCPOEMA ;
- 60 parties d'AISOBOR ;
- 40 parties d'époxy diméthacrylate d'oligomères en solution dans le TMPTA ;
- 2 parties de peroxyde de benzoyle commercialisé sous la dénomination CADOX ; et
- 1,5 partie de diméthylparatoluidine.

La température s'élève jusqu'à Tm (°C) en $\Delta t$ (min).
Les résultats sont rapportés dans le Tableau 3. On laisse ensuite refroidir lentement, de façon quasi adiabatique, les blocs ainsi préparés.

Tableau 3

| Exemple | DCPOEMA (catalyseur) | $T_m$ (°C) | Δt (min.) | Aspect du bloc |
|---|---|---|---|---|
| 15 (invention) | n°1 [Zr(Acac)$_4$] | 31 ± 1 | 53 ± 7 | Blocs bons |
| 16 (comparatif) | n°2 [MeONa] | 28 ± 1 | 69 ± 15 | Surface non incluse |
| 17 (comparatif) | n°3 [LiOH] | 28,2 ± 1 | 85 ± 33 | Blocs friables et exsudation d'eau |
| 18 (comparatif) | n°3 bis [LiOH] | 30 ± 2 | 71 ± 19 | Blocs friables et exsudation d'eau |

**Revendications**

1. Utilisation d'au moins l'un parmi :

  - le tétraacétylacétonate de zirconium (Zr(Acac)$_4$) ;
  - le tétraacétylacétonate de titane [Ti(Acac)$_4$] ; et
  - le tétra-n-butoxytitane [Ti(OBu)$_4$],

  comme agent améliorant la capacité du méthacrylate de dicyclopentadiényloxyéthyle (DCPOEMA) à former une émulsion stable avec l'eau sans ajout de tensio-actif.

2. Utilisation selon la revendication 1, caractérisé par le fait que chacun parmi Zr(Acac)$_4$, Ti(Acac)$_4$ et Ti(OBu)$_4$ est utilisé à raison de 50 à 50 000 ppm par rapport au DCPOEMA.

3. Utilisation selon la revendication 2, caractérisé par le fait que chacun parmi $Zr(Acac)_4$, $Ti(Acac)_4$ et $Ti(OBu)_4$ est utilisé à raison de 500 à 5000 ppm par rapport au DCPOEMA.

4. Procédé d'inclusion d'eau ou d'une matière contenant de l'eau au sein d'un bloc solide de (co)polymère du DCPOEMA et/ou du DCPOEMA époxydé, procédé suivant lequel on conduit la (co)polymérisation du DCPOEMA après mélange du système de (co)polymérisation avec l'eau ou la matière contenant de l'eau à inclure, caractérisé par le fait que le système de (co)polymérisation contient au moins l'un parmi $Zr(Acac)_4$, $Ti(Acac)_4$ et $Ti(OBu)_4$, comme agent améliorant la capacité du DCPOEMA à former une émulsion stable avec l'eau.

5. Procédé selon la revendication 4, caractérisé par le fait que chacun parmi $Zr(Acac)_4$, $Ti(Acac)_4$ et $Ti(OBu)_4$ est utilisé à raison de 50 à 50 000 ppm par rapport au DCPOEMA.

6. Procédé selon la revendication 5, caractérisé par le fait que chacun parmi $Zr(Acac)_4$, $Ti(Acac)_4$ et $Ti(OBu)_4$ est utilisé à raison de 500 à 5000 ppm par rapport au DCPOEMA.

7. Procédé selon l'une des revendications 4 à 6, caractérisé par le fait que la matière contenant de l'eau à inclure au sein d'un bloc est une résine échangeuse d'ions contaminée par des éléments radio-actifs et contenant une quantité d'eau comprise en général entre 40 et 65% en poids ; ou de l'eau contenant des polluants, tels que des ions monovalents ou polyvalents, par exemple des sels de cobalt, de fer, de chrome, de bore, de césium, à des concentrations relativement élevées, pouvant aller jusqu'à 50 % en poids, ou plus, même dans des conditions de pH extrêmes, telles que pH 1.

8. Procédé selon l'une des revendications 4 à 7, caractérisé par le fait que l'on forme des blocs incorporant de l'eau dans une proportion qui peut aller jusqu'à 75% en poids par rapport au système de monomères mis en jeu.

9. Procédé selon l'une des revendications 4 à 8, caractérisé par le fait que l'on utilise un système de copolymérisation dont les monomères comprennent en dehors du DCPOEMA :

(1) au moins un comonomère additionnel choisi parmi les monomères acryliques, les monomères méthacryliques, les monomères vinylaromatiques et les monomères diéniques ; et/ou
(2) au moins un monomère réticulant choisi notamment parmi les di- ou triméthacrylates, comme le triméthacrylate de triméthylolpropane, le diacrylate d'hexanediol, le triacrylate de triméthylolpropaneoxyéthyle, le triacrylate de glycéroltrioxypropyle, le diméthacrylate de l'éthylène glycol et le diacrylate de tripropylène glycol,

les monomères (1) et/ou (2) pouvant représenter chacun jusqu'à 20% en poids par rapport au DCPOEMA.

10. Procédé selon l'une des revendications 4 à 9, caractérisé par le fait que le système de (co)polymérisation comprend au moins un agent épaississant choisi parmi les oligomères (méth)acryliques tels que le diméthylacrylate de diglycidyle du bisphénol et le fumarate de diglycidyle du bisphénol, le ou les agents épaississants pouvant représenter jusqu'à 30% en poids par rapport au DCPOEMA.

11. Procédé selon l'une des revendications 4 à 10, caractérisé par le fait que le système de (co)polymérisation comprend :

- au moins un initiateur de polymérisation choisi parmi les peroxydes et les percarbonates, à raison de 0,5 à 5% en poids par rapport à tous les autres constituants du système de (co)polymérisation ; et
- au moins un activateur choisi parmi les amines tertiaires et les activateurs organométalliques à raison de 0,01 à 4% en poids par rapport à tous les autres constituants du système de (co)polymérisation.

12. Procédé selon l'une des revendications 4 à 11, caractérisé par le fait que le système de (co)polymérisation contient au moins un agent de transfert.

13. Procédé selon l'une des revendications 11 et 12, caractérisé par le fait que l'on conduit la (co)polymérisation à la température ambiante, en agitant dans un réacteur, le ou les monomères, l'eau ou la matière contenant de l'eau, l'initiateur de polymérisation, en y ajoutant l'activateur sous agitation, et, le cas échéant, un agent de transfert, la température s'élevant ensuite à une valeur au plus égale à 100°C au bout d'un laps de temps au plus égal à 40 minutes, pour obtenir un bloc qu'on laisse refroidir et que l'on peut ensuite soumettre à une cuisson à une température comprise entre 50 et 85°C pendant 2 à 15 heures.

Fig. 1

**Office européen des brevets**

# RAPPORT DE RECHERCHE EUROPEENNE

Numéro de la demande

EP 99 40 0625

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP 0 556 118 A (ATOCHEM ELF SA) 18 août 1993 * le document en entier * ----- | 1,4 | G21F9/16 G21F9/30 B09B3/00 B09C1/08 |
| | | | **DOMAINES TECHNIQUES RECHERCHES (Int.Cl.6)** G21F B09B B09C |

Le présent rapport a été établi pour toutes les revendications

| Lieu de la recherche | Date d'achèvement de la recherche | Examinateur |
|---|---|---|
| LA HAYE | 16 juin 1999 | Brothier, J-A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 0 944 096 A1

**ANNEXE AU RAPPORT DE RECHERCHE EUROPEENNE**
**RELATIF A LA DEMANDE DE BREVET EUROPEEN NO.**         EP 99 40 0625

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

16-06-1999

| Document brevet cité au rapport de recherche | Date de publication | Membre(s) de la famille de brevet(s) | | Date de publication |
|---|---|---|---|---|
| EP 0556118 A | 18-08-1993 | FR | 2687499 A | 20-08-1993 |
| | | AT | 151912 T | 15-05-1997 |
| | | CA | 2089471 A,C | 14-08-1993 |
| | | DE | 69309742 D | 22-05-1997 |
| | | DE | 69309742 T | 20-11-1997 |
| | | DK | 556118 T | 06-10-1997 |
| | | ES | 2101966 T | 16-07-1997 |
| | | GR | 3023945 T | 30-09-1997 |
| | | JP | 2804213 B | 24-09-1998 |
| | | JP | 6082599 A | 22-03-1994 |
| | | KR | 9711262 B | 08-07-1997 |
| | | US | 5362771 A | 08-11-1994 |

EPO FORM P0460

Pour tout renseignement concernant cette annexe : voir Journal Officiel de l'Office européen des brevets, No.12/82

11